(19) Europäisches Patentamt / European Patent Office / Office européen des brevets

(11) **EP 2 962 290 B1**

(12) **EUROPEAN PATENT SPECIFICATION**

(45) Date of publication and mention of the grant of the patent:
**17.07.2019 Bulletin 2019/29**

(21) Application number: **13875851.1**

(22) Date of filing: **21.02.2013**

(51) Int Cl.:
*H04N 13/271* (2018.01)     *H04N 13/111* (2018.01)
*G09B 19/00* (2006.01)      *G06T 15/10* (2011.01)
*G06T 19/20* (2011.01)

(86) International application number:
**PCT/US2013/027153**

(87) International publication number:
**WO 2014/130039 (28.08.2014 Gazette 2014/35)**

(54) **RELAYING 3D INFORMATION BY DEPTH SIMULATION USING 2D PIXEL DISPLACEMENT**

WEITERLEITUNG VON 3D-INFORMATIONEN ÜBER TIEFENSIMULATION MIT 2D-PIXELVERSCHIEBUNG

TRANSMISSION D'INFORMATIONS 3D PAR SIMULATION DE PROFONDEUR À L'AIDE DE DÉPLACEMENT DE PIXEL 2D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.01.2016 Bulletin 2016/01**

(73) Proprietor: **HERE Global B.V.**
**5611 ZT Eindhoven (NL)**

(72) Inventor: **Lynch, James**
**Chicago, Illinois 60606 (US)**

(74) Representative: **Potter Clarkson**
**The Belgrave Centre**
**Talbot Street**
**Nottingham NG1 5GG (GB)**

(56) References cited:
**US-A1- 2001 043 219      US-A1- 2007 279 415**
**US-A1- 2009 213 240      US-A1- 2010 215 250**
**US-A1- 2010 315 412      US-A1- 2011 096 832**
**US-B1- 6 466 207**

• **BAYAKOVSKI Y ET AL: "Depth Image-Based Representation and Compression for Static and Animated 3-D Objects", IEEE TRANSACTIONS ON CIRCUITS AND SYSTEMS FOR VIDEO TECHNOLOGY, IEEE SERVICE CENTER, PISCATAWAY, NJ, US, vol. 14, no. 7, 31 July 2004 (2004-07-31), pages 1032-1045, XP011114306, ISSN: 1051-8215, DOI: 10.1109/TCSVT.2004.830676**
• **BURSCHKA ET AL.: 'Recent Methods for Image-based Modeling and Rendering' IEEE VIRTUAL REALITY 2003 TUTORIAL 1 22 March 2003, XP055279026 Retrieved from the Internet: <URL:hftp://www.researchgate.net/publicatio n/2565529_Recent_Methods_for_Image- based_Modeling_and_Rendering/file/32bfe50ef eaa5f30dc.pdf>**

## Description

## Technical Field

The exemplary and non-limiting embodiments relate generally to electronic imaging and more specifically to relaying 3D information by depth simulation using 2D pixel displacement.

## Background Art

This section is intended to provide a background or context to the embodiments disclosed below. The description herein may include concepts that could be pursued, but are not necessarily ones that have been previously conceived, implemented or described. Therefore, unless otherwise explicitly indicated herein, what is described in this section is not prior art to the description in this application and is not admitted to be prior art by inclusion in this section.

Depth information in 3-dimensional (3D) images is typically shown using stereo image pairs with 3D glass special display screens. For 2D displays, existing 3D 'motion' methods typically use a stereo pair of images and/or apply an affine transform such that the entire image is rotated. Another typical method is to turn the image into a texture and project the image onto a 3D model (for example, a mesh of a depth-map), where a 3D textured object may be rotated. However, this usually results in many holes in the image (for example, Google or Bing's street-level image warp between different image bubbles).

US 2007/0279415 A1 relates to using a first two-dimensional image and computer-generated geometry to render a stereoscopically complementary second two-dimensional image, thereby creating a stereoscopic image pair. The method includes protecting at least a portion of the first two-dimensional image, captured from a first camera location, onto the computer-generated geometry. The first image data then has associated depth values from the computer generated geometry, and the first image data, a second camera location and the computer-generated geometry can be used to render the complementary second two-dimensional image.

US 2010/0315412 A1 relates to reconstructing a three-dimensional scene from a collection of two-dimensional images. Computer vision algorithms are used on the collection of two-dimensional images to identify candidate two-dimensional planes which are used to model visual characteristics of the environment of the two-dimensional images to create a navigable three-dimensional scene.

US 2010/0215250 A1 relates to displaying transitions between street level images. A plurality of polygons are created that are both textured with images from a 2D street level image and associated with 3D positions, the 3D positions corresponding to the 3D positions of the objects contained in the image. These polygons are rendered from different perspectives to convey the appearance of moving among the objects contained in the original image.

## Summary

According to a first aspect, a computer implemented method to simulate three-dimensional appearance of a two-dimensional image of a scene using a corresponding depth map according to claim 1.

According to a second aspect, an apparatus configured to simulate three-dimensional appearance of a two-dimensional image of a scene using a corresponding depth map according to claim 13.

According to a third aspect, a computer program product comprising a non-transitory computer readable medium bearing computer program code embodied herein for use with a computer, the computer program code configured to perform any of the methods in claims 1-12.

## Brief Description of the Drawings:

For a better understanding of the nature and objects of the embodiments described herein, reference is made to the following detailed description taken in conjunction with the following drawings, in which:

Figure 1a is an illustration of an image or a portion of the image taken by a camera;

Figure 1b is an illustration of an image or a portion of the image taken by a camera at arbitrary camera angle;

Figure 2a is a schematic for generation of optical distance data using the optical distancing system such as a LiDAR device;

Figure 2b is an image representing depth-map data generated by the optical distancing system such as a LiDAR device;

Figure 3 is an image of depth-map data represented in scan lines 401;

Figure 4 are diagrams showing how the color and depth images can represent the same viewpoint in the image;

Figure 5 is a simplified scene of an image taken by the camera;

Figure 6 is an image showing a few examples of pixel locations that will be processed according to an embodiment described herein;

Figure 7 is an image showing matching depth values for the exemplary pixel locations according to an embodiment described herein;

Figure 8 is an image showing the computed 2D pixel offsets for the exemplary pixel locations according to an embodiment described herein;

Figure 9 an image demonstrating an example of how the warp may be applied at a specific time according to an embodiment described herein;

Figure 10 an image further demonstrating how the warp may change in time and space according to an embodiment described herein;

Figure 11 is a representation of a typical computer graphics 3D view frustum 20 used for implementing various embodiments described herein;

Figure 12 is a diagram depicting a single pixel (denoted as Pxy) for which a new RGB color value can be determined using the embodiment described herein;

Figure 13 is a diagram depicting a 2D point (pixel) denoted $P_{2D}$ being projecting into 3D world space as a point denoted $P_{3D}$ using defined camera parameters according to an embodiment described herein;

Figure 14 is a diagram a warp function applied to the 3D point denoted $P_{3D}$ and then projected back to 2D plane according to an embodiment described herein;

Figure 15 is a diagram depicting a typical 3D warp function as a time varying sine wave in the axial direction of depth into the screen according to an embodiment described herein;

Figure 16 is a diagram depicting an alternative (pulsed) warp function according to an embodiment described herein;

Figure 17 is a diagram depicting an alternative warp function limited to a specific region of the 3D volume according to an embodiment described herein;

Figure 18 is a flow chart demonstrating implementation of exemplary embodiments described herein; and

Figure 19 is a block diagram of an electronic device for practicing exemplary embodiments described herein.

## Detailed Description

A method, apparatus, and software related product (such as a non-transitory computer readable memory) are presented for relaying 3D information by depth simulation using 2D pixel displacement. According to various embodiments, 3D appearance is simulated on a 2D display using only a single 2D image without requiring a stereo image capture and without the need of a specialized 3D monitor/display. Given a single image captured by a camera and a matching depth-map, an indication of 3D details on the image may be provided using time based motion, jittering, wiggling or pivoting of 2D pixels. The movement of pixels is defined by the 3D position of each pixel as defined by the depth-map.

In one embodiment, pre-built depth-maps (such as a map generated by LiDAR device) may be used to move pixels on the screen as a function of depth. A single image such as a panoramic street level image can provide all color details of the displayed image, while the depth information can provide the movement of the pixels. Thus a conventional panoramic image display of a normal viewer with introduced motion to the pixels to provide a sense of 3D depth to the scene can be used in this embodiment.

Moreover, various embodiments described herein may provide passing a non-linear wave type warping function through a 3D space the image represents. Also, the embodiments described herein are applied to the image in a 2D plane such that a 2D pixel "lookup" offset is provided for each pixel. Although the effect is applied in 2D, the offset values are computed based on the 3D pixel depth values. Thus, the wave movements contain artifacts/appearance of the 3D depth such as perspective. The wave looks smaller as the depth away from the screen increases. The main emphasis is that different depths are visible because of the pixels moving in different directions.

Furthermore, the process description can be simplified by thinking of the image as a "pop-up" book with the image separated into several depth layers. The process then shakes, rotates, or scales each layer differently so that the user can distinguish objects of varying depth. However, the process described herein uses continuous depth rather than discrete layers. The movement of each depth is defined as a smooth cyclic function which is continuous in depth such as a sine wave based on depth. The frequency and amplitude may be varied.

The described embodiments, though, are different from existing approaches where discrete moving layers move at different rates (for example, parallax scrolling in video games) or a pop-up style book where the scene is reduced into discrete layers. This conventional approach has the problem of having to decide (usually manual) which parts of the image belong to which discrete layers. For example, an automatic process might incorrectly separate a house into two different layers with the undesired result of the house tearing apart.

Embodiments described herein instead treat the scene using a continuous depth warp (such as a sine wave) through the space. This results in a 'wiggle' motion to indicate different depths without breaking apart objects in the scene. There is no need to group objects of similar depths or group pixels based on their association with an object in the scene (in other words, no need to group).

Thus, according to an embodiment, after obtaining (receiving or collecting/acquiring) by an apparatus (such as a camera, camera-phone, electronic displaying device, computer, etc.) a two-dimensional image and a depth-map of the two-dimensional image of a scene, the apparatus may determine a color of each pixel for all or selected pixels in the two-dimensional image. Then it can subsequently move the determined color of each pixel for the all or selected pixels in the two-dimensional image to another pixel in the two-dimensional image using at least the depth-map image and based on a predefined procedure to create a three-dimensional appearance of the two-dimensional image (when displayed). The moving of the each pixel may comprise: determining a depth of the each pixel by looking up the depth-map; converting this (each) pixel location, having two coordinates, into a location having three coordinates including the determined depth as a third coordinate; moving the three coordinates of the each pixel to a new 3D location using a predetermined function (warping function); projecting the new 3D location to another location comprising another pixel location in a 2D plane comprising the two-dimensional image; and looking up a color of the another pixel and assigning the looked up color to this (each) pixel.

For the purposes of the describing embodiments described the term "color" may be interpreted in a broad sense as a variety of colors (such as RBG) or shades of black and white, e.g., on a grey scale.

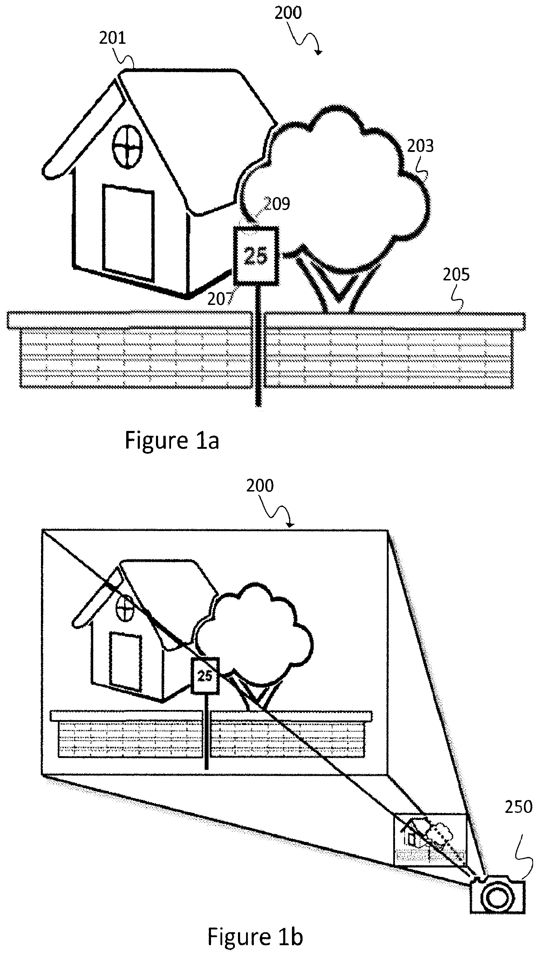

Figures 1-19 process-examples using various embodiments are described in detail.

Data collection may comprise collecting 360° (or 360) panoramic images every 4 meters along a road during driving. Camera orientation, position (geo-location) and intrinsic parameters (such as field of view, aspect ratio, etc.) may be precisely captured for each image. At the same time, scanning the street with an optical distance system such as a 360° (or 360) rotating LiDAR system (1.3 million points per second) can be performed. The LiDAR may provide 3D points of the street and surrounding structures. This LiDAR point data may be converted into a dense depth-map from the same viewpoint of each captured image (FOV, camera location, camera orientation). Thus a matching depth-map image for each color RGB image can be provided.

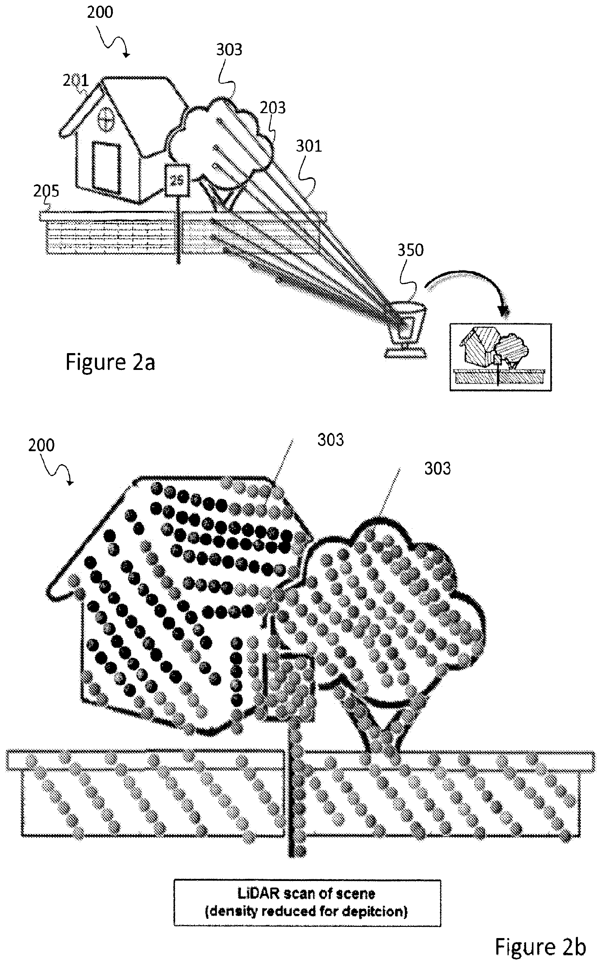

For an exemplary process described herein, only a single monocular RGB/color image and its associated depth-map image are used. 3D geometry is not required. However, it may be incorporated by rendering the 3D objects into the same depth-map (using the same viewing parameters) to create a new depth-map. Figures 1a-1b and 2a-2c represent the data collection. Figure 1a illustrates an image 200 (or at least a portion of the captured image) which may depict outdoor environments (as shown) indoor environments (for example, shopping mall, convention center, etc.) or hybrid outdoor and indoor environments (such as fairgrounds, amusement park, etc.). Also the image 200 may be a panoramic image, a street level view image, or a satellite view image. Alternatively, the image 200 may be displayed in an augmented reality system. In the augmented reality system, the image 200 is received in real time by a camera.

The image 200 includes objects at a plurality of depths. In the example shown in Figure 1a, four depths are shown. A sign 207 is nearest to the viewer, which is followed by a wall 205, and a tree 203. A house 201 is the farthest from the view. A hypothetical user selection 209 is in an area in the image 200 that is very near the house 201, the tree 203, and the sign 207 in the image 200 even though in the physical world, these objects are relatively far apart.

Figure 1b illustrates a specific camera angle (orientation) and geo-location that the image 200 was collected by a camera 250. The camera angle may have one, two, or three components (e.g., roll, pitch, yaw) measured from any of three coordinate axes. The captured camera angle may be used to align the depth data to the panoramic image. The image 200 may be a planar image additionally defined by a field of view. Also, the camera 250 may have an unknown position and/or orientation at the time the image 200 was collected.

Figure 2a illustrates generation of optical distance data using the optical distancing system 350. The optical distancing system 350 may be a LIDAR device, a stereoscopic camera, a time of flight camera, a structured light device, or another similar device. In the example of a LIDAR device, one or more (for example, 1, 2, 10, etc.) lasers rotate about an axis. The optical distancing system 350 may be coupled with an inertial measurement unit (IMU) and/or an inertial navigation system (INS) in order to provide a geographic reference to the optical distance data. Figure 2a illustrates one such plane including laser paths 301 and depth points 303. The optical distance system 350 measures the distance from the optical distancing system 350 to the various objects. In another example, the structured light device can emit light into objects and a camera can capture images of the structured light to determine distance based on the shape of the light in the captured images. The structured light may be infrared light or have another light spectrum not visible to humans.

Figure 2b illustrates depth-map data 303 as generated by the optical distancing system 350. The depth-map data 303 may be arranged approximately linearly because the laser scans in lines. Figure 2b is not to scale and typically many more points may be used than shown and may be in any arrangement. Objects that are closer to the optical distancing system 350 may be associated with a higher density of points, and objects farther away from the optical distancing system 350 are associated with a lower density of points. This collection of 3D points may be viewed from any location and direction. A view of the points may be generated from the exact same geo-location and orientation as the captured color camera image. The points from this vantage point may be stored as a depth-map which may result in a synchronized set of color and depth map images.

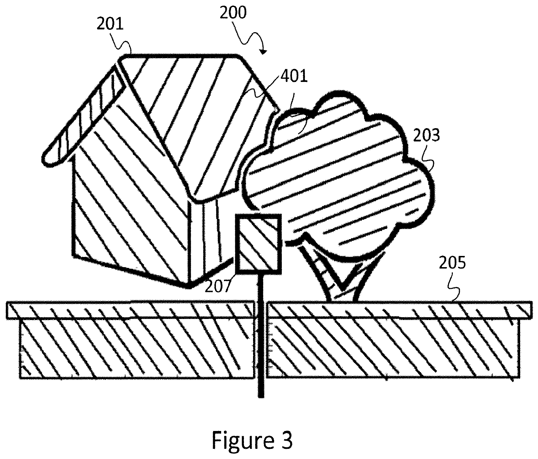

Figure 3 illustrates depth-map data represented in scan lines 401 of the optical distancing system 350. Other patterns may be used.

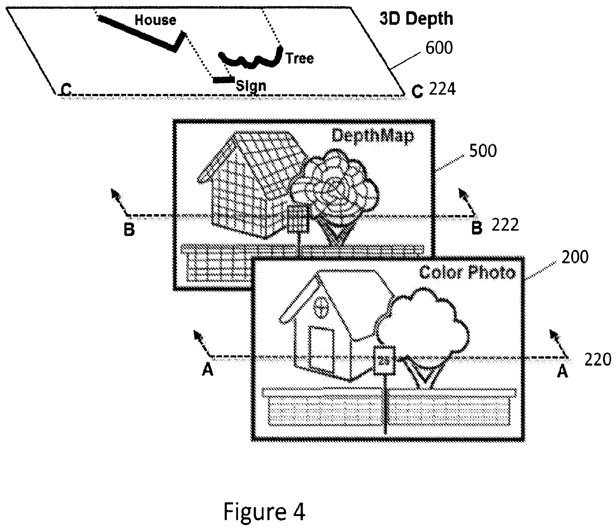

Figure 4 shows how the color and depth images can represent the same viewpoint. To get the depth of a pixel in the color image, the same location in the depth-map image is analyzed. Figure 4 demonstrates the calculation of image mapped depth values from a pre-generated depth-map (see Figures 2a-2b and 3). Figure 4 illustrates a first cross section A-A 220 of the image 200, which corresponds to a second cross section B-B 222 in the depth-map grid 500. The C-C 224 cross section plane or top down view 600 in Figure 4 shows the depth values which are defined to correspond to the sign 207, house 201, and tree 203. The depth map cross section C-C 224 indicates that the house 201 is the furthest from the camera while the sign 207 is the closest.

At this point, a database of images and associated depth-maps may be pre-built and stored. Then each image in the database may be processed independently. There is no need to use a series of images in the warp process. Based on some user interaction, an image location may be chosen for the user to display. The image can be loaded onto the client device. When the user decides to turn on the depth simulation, the matching depth-map image is also loaded.

Typically, the scene may be displayed using a GPU processor with a fragment shader. A fragment shader can allow a programmer to provide a piece of code that operates on pixels of interest. The process may be very efficient since the pixels can be operated on in parallel by the dedicated GPU cores (this is a standard option on most computers and many cell phones).

Thus, a pixel shader such as WebGL, or GPU (which is now available on smart phones and most PCs) may be used. Therefore, the process only requires a single 2D color image to be delivered to the client along with a depth image. The client can perform all dynamic motion using a short piece of shader code. A prototype on a standard laptop may run full screen at over 60Hz. The shader code can operate on each pixel independently and allow modifying the color of each pixel. A texture lookup can be defined for both the color image and the depth image. The depth image may be an equal or different resolution than the color image.

Moreover, the process may be implemented in such a shader to emulate real-time 3D pixel depth motion. Every pixel on the screen can be passed though the fragment shader. The process then can compute an offset for every pixel, P. The offset may be used to lookup a different nearby pixel, C. The color of the pixel at P can be replaced by the observed RGB color at C. The offset may be computed by virtually computing the 3D location of the depth pixel, warping the position by some spatial function in this 3D space, and projecting the resulting 3D position back onto the 2D image plane.

The examples below demonstrate the process on just a few pixel locations. However, all pixels may be run through the fragment shader such that all pixels would have a recomputed RGB value (although this does not mean that the RGB color will always change: for example when there is no motion for a pixel, the color may not change).

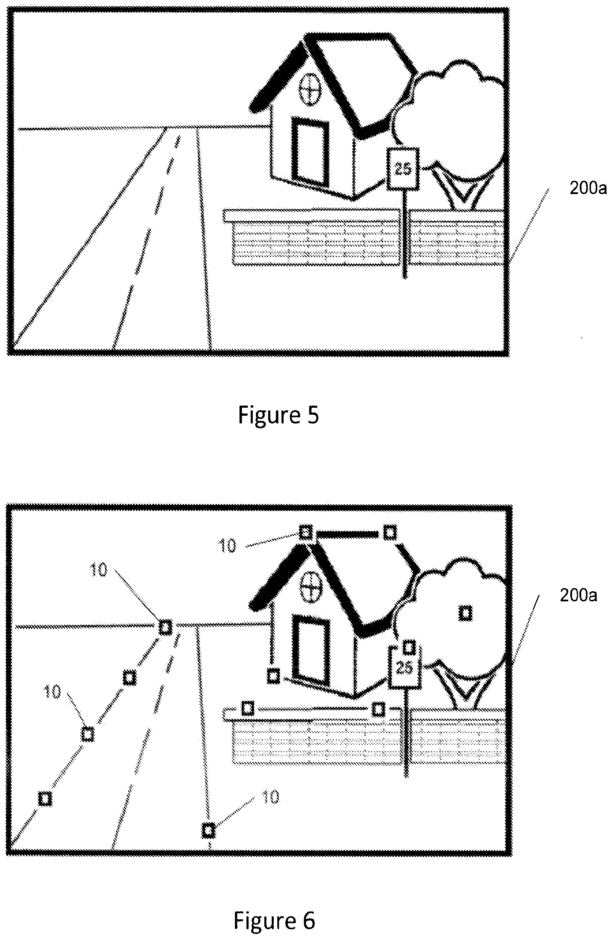

Figure 5 shows a simplified scene of an image 200a taken by the camera 250. In the process described herein this would be an image (or a mono image with depth) of an actual camera capture (a 360 panoramic image bubble).

Figure 6 shows a few examples of pixel locations 10 in the image 200a that will be processed (all pixels may be operated on).

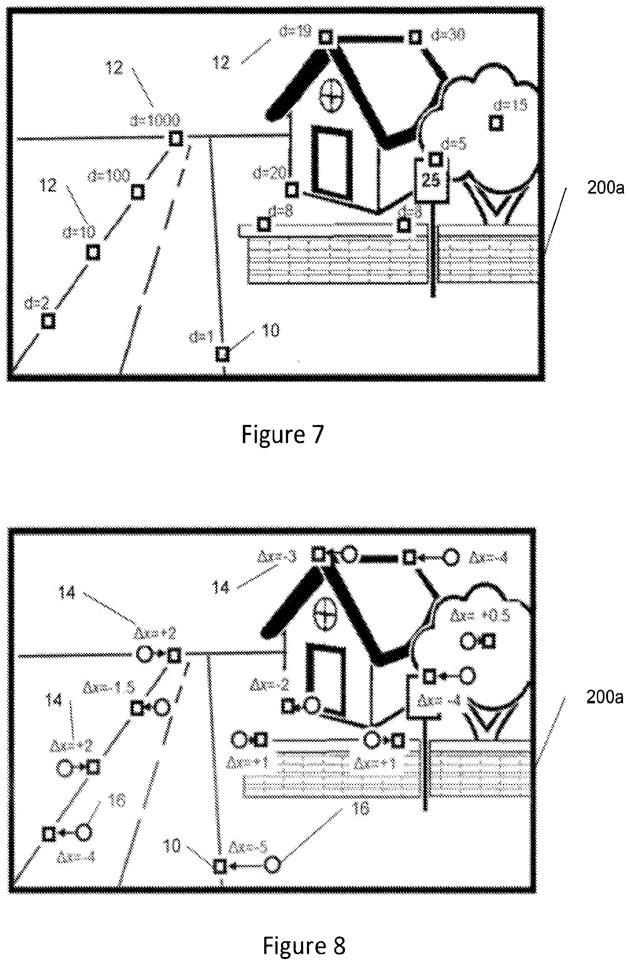

Figure 7 displays the matching depth values 12 for the exemplary pixel locations 10 from the depth-map for the image 200a. In reality the depth values may be encoded into the depth-map based on some predefined range and scale, and may be stored non-linearly. For simplicity, the values may be stored in the depth-map as a range from 0-1. When the depth value is accessed, the 0-1 range is scaled back into the actual (meter) depth values (such as the 0-1 range may be scaled by a specified maximum (meter) depth)

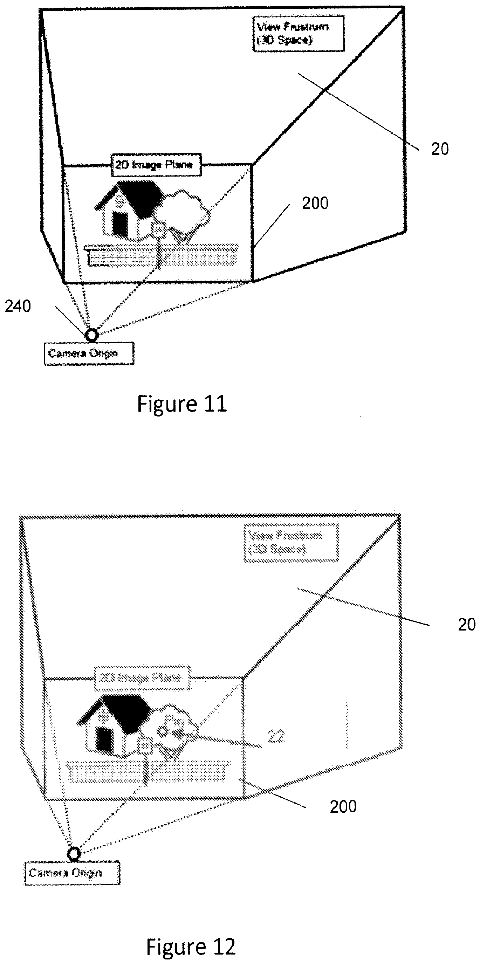

Each 2D pixel location (such as shown in figure 6) is combined with the associated depth value such as shown in figure 7, so that the 2D pixel becomes a 2½ D point in a screen space. Then at this point it may be possible to warp the pixels by applying, for example, a sine wave offset based on screen depth only (no perspective), such that differences in depth can be observed. However, in this scenario the "relative" depth motion will not match the perspective and view of the real world scene. Therefore, our process projects" the 2D screen pixel point into 3D space using the previously collected camera parameters and the current viewer viewpoint (FOV, view direction, etc.). This can be a linear projection using a 4x4 matrix built from a perspective matrix and a viewpoint matrix. The result could be a 3D point in world space which may be warped based on some 3D spatial warp function (described in more detail in Figures 12-18). The pixel point then may be "re-projected" back into the original 2D image plane. The resulting 2D pixel location of the "re-projected" warped point can define a new color. The color from this new location may be assigned to the original 2D pixel location. When applied to all pixels, a time based cyclic undulation of the 2D image that exposes perspectively correct 3D depth details of the image through motion may be implemented.

Figure 8 displays the computed 2D pixel offsets 14 for the exemplary pixel locations 10 that will be used for looking up the replacement RGB color values. The calculated pixel offsets may be computed using the 3D depth values (see Figure 7) and a time varying 3D warp function. It is noted that in Figure 8 the pixels 10 are assigned a color based on the offset to the neighbor pixel 16 (shown as circles) as explained further.

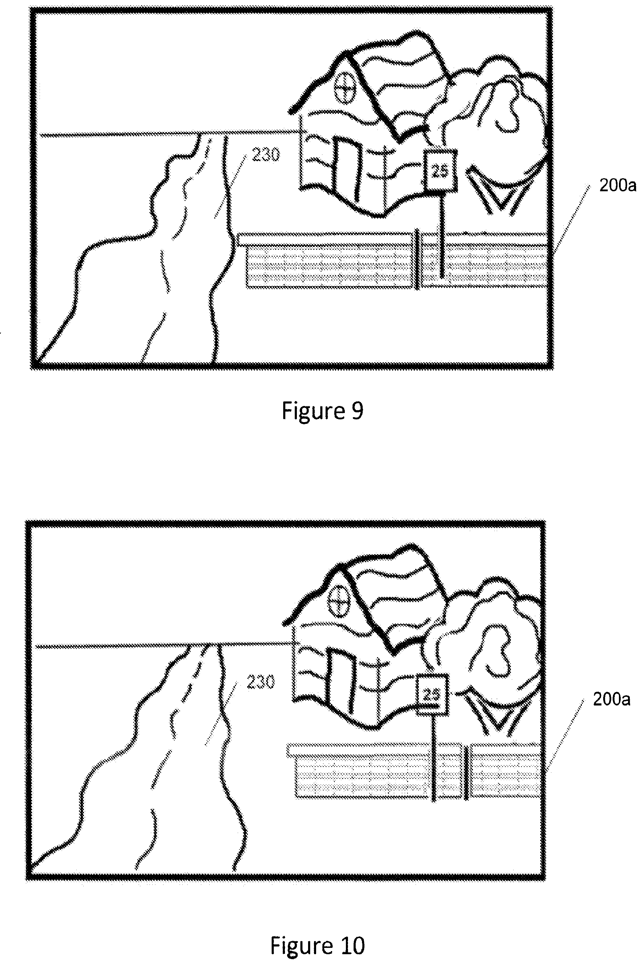

Figure 9 shows an example of how the warp can be applied at a specific time. The warp may be a continuous function of time (such as a time varying wrap, using a cosine function for example), so that a road 230 continuously warps (left to right in this case). Also, note that the warp of the road 230 decreases with distance (this is important to the process). This is due to the fact that warping takes place for the point in 3D space and perspective plays an important role. If the offset is applied based on a liner depth only, the perspective effect will be lost.

Figure 10 further demonstrates how the warp of the road 230 may change in time and space (not just a simple affine transform). It is noted that the warp is continuous in space (not just moving discrete layers).

Figure 11 displays a typical computer graphics 3D view frustum 20. As shown a 3D scene may be rendered onto the 2D image plane 200 using a projection from the camera origin 240 (as shown) and view matrix that converts points from 3D world space onto the image plane. The view matrix may be a 4x4 matrix multiplied by a 4x1 vector [x, y, z, w]. The w coordinate (homogeneous) can be used to provide the perspective projection into the plane. The 2D color image may be thought of as lying on the frustum face. By adding depth values to each pixel, it can be possible to observe where the pixel would be within the 3D view frustum 20 (world space).

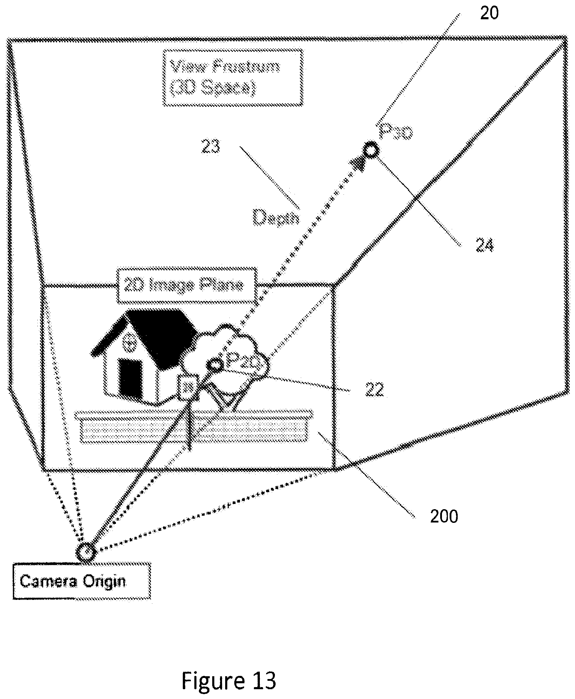

Figure 12 shows a single pixel 22 (denoted as Pxy) for which a new RGB color value can be determined using an embodiment described herein. The depth of this pixel 22 can be determined from the depth-map. Then the depth value can be converted into the depth value 23(see figure 13) in a screen space such that a 3D point may be presented in the screen coordinate space as described herein and detailed further below.

Figure 13 shows a point (pixel) 22, denoted as $P_{2D}$, being projected into 3D view frustum 20 (world space) as a point 24 (denoted as $P_{3D}$) having a depth 23 using defined camera parameters (such as a matrix M), $P_{3D}$ may be a perspective function of [$P_{2D}$, depth, M]. In one non-limiting example $P_{3D}$ = [$P_{2D}$, depth] *[M], where M may be a 4×4 matrix comprising camera and perspective projection components (such as [M] = $M_{cameraView}$*$M_{perspective}$for example).

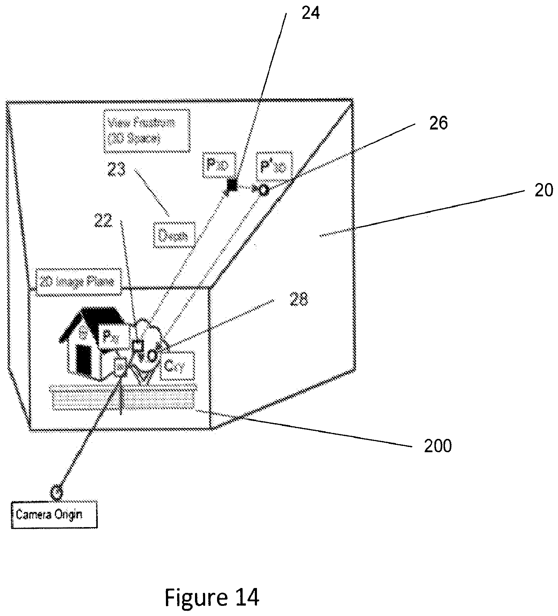

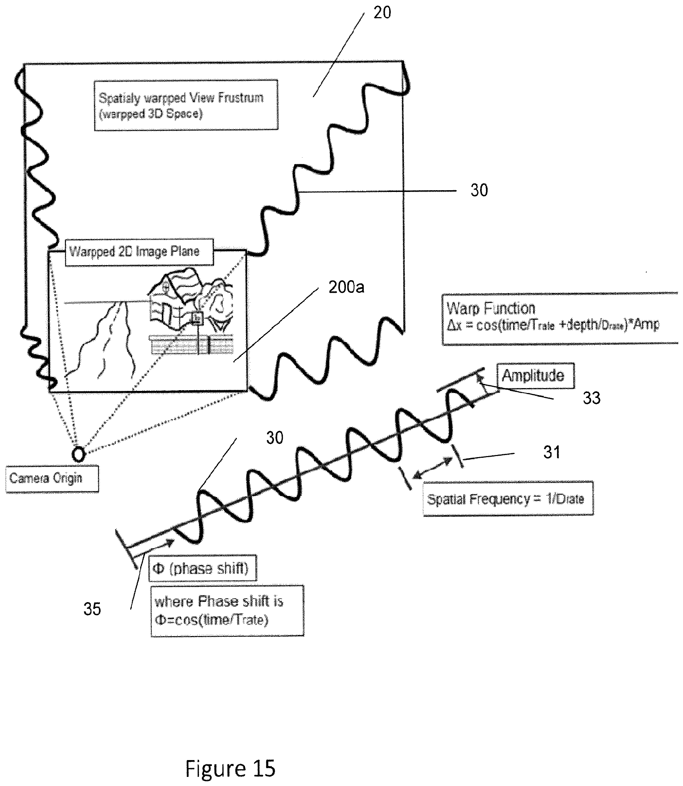

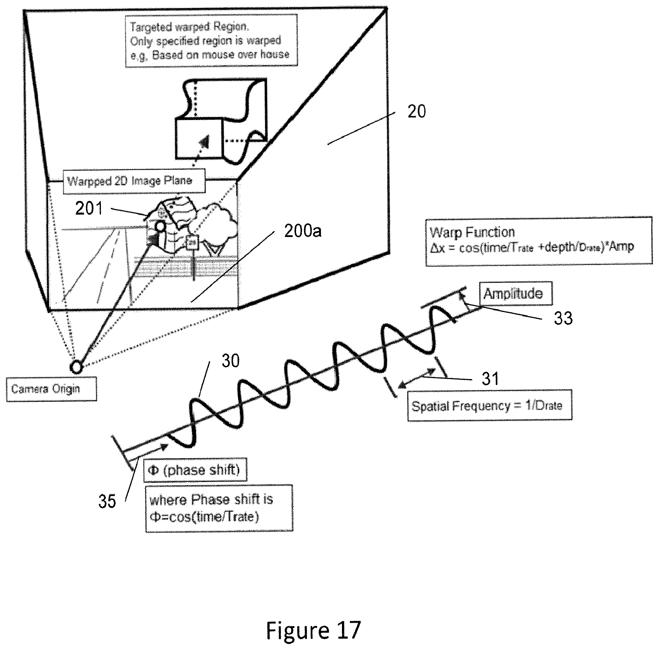

Figure 14 shows the warp function applied to the 3D point 24 (denoted $P_{3D}$). The warp may be a continuous function in 3D space, such as a sine wave. There may be two frequencies in the warp function. One frequency may define a time rate ($T_{rate}$) or a speed of the wave (a suitable value can be about 1 Hz). Another frequency may define a spatial distance (special frequency equals 1/$D_{rate}$) of the wave. For the street scenes of the image 200, a suitable spatial wave distance (from peak-peak) is about 10 meters. An alternative warp function might provide a rotation about some user defined 3D point in space, provide a limited, "focus" region to warp (based on a 3D selection), or provide a single, non-repeating 'pulse' function that moves through the space. The 3D "focus" position may be defined by the 2D cursor location and the observed depth value at that pixel location. As shown in Figure 14, the shifted point/pixel location 26 (denoted $P'_{3D}$) may be determined as

$$P'_{3D} = P_{3D} + \Delta_{Shift},$$

where $\Delta_{Shift}$ is a function of depth, time, amplitude, $T_{rate}$ and $D_{rate}$. This is a repeating cyclic function in 3D space, for example, $\Delta x$ = cos(time/Trate + depth/Drate)*Amp (see definition of $D_{rate}$ and Amplitude (Amp) in Figure 15 and 17). A more advanced warp function may be defined for a specific focus area ($P_{3Dselection}$) such that $\Delta_{Shift}$ can be a function of falloff, depth, time, amplitude, Trate and Drate, where the falloff is a distance between $P_{3D}$ and $P_{3Dselection}$.

The "shifted" or warped 3D point 26 (denoted $P'_{3D}$) may be then projected back into the 2D image plane 200. The resulting "new" 2D pixel location 28 (denoted as $C_{x'y'}$ in Figure 14, which can be given by $C_{x'y'}$ = [$P'_{3D}$]*[$M_{inverse}$]) may provide a new color value. For example the original fragment color in the pixel point 22 may be replaced by the color value at the pixel point 28 ($C_{xy'}$). In other words, the RGB value(if this color gamut is used) at the pixel point 22 ($P_{2D}$) may be replaced with the RGB value from the pixel point 28 ($C_{xy'}$), where the pixel 28 ($C_{xy'}$) is a projection of the 3D point 26 ($P'_{3D}$) back onto the 2D image plane.

The color at the location 28 ($C_{xy'}$) may not be altered in the described pass of the fragment shader. The pixel at the location 28 ($C_{xy'}$) may be processed later with its own pass through the fragment shader.

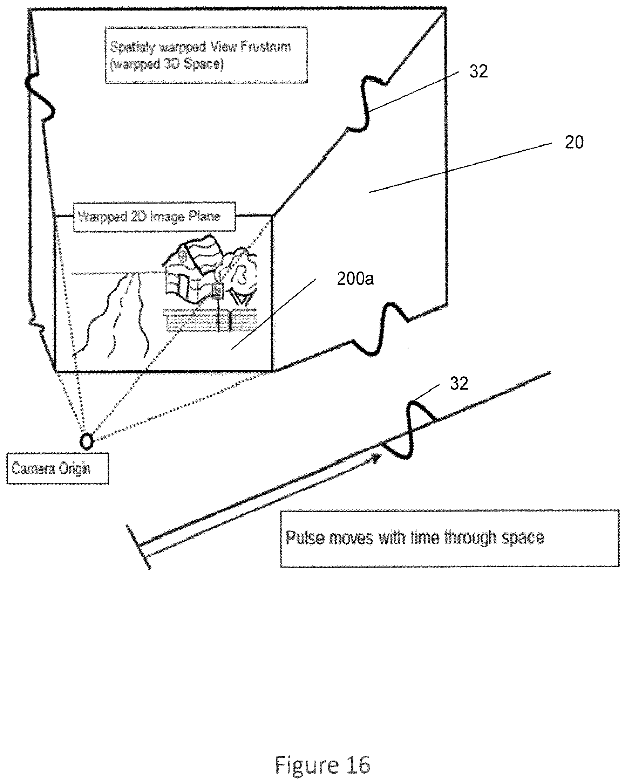

Figure 15 demonstrates a typical 3D warp function as a time varying sine wave in the axial direction of depth into the screen (as stated above, the warp function 30 may be given by $\Delta x$ = cos(time/$T_{rate}$ + depth/$D_{rate}$)*Amp), where Drate is inversely proportional to a spatial frequency 31 (spatial frequency = 1/$D_{rate}$). The phase shift 35 can provide the time varying aspect of the function and may vary as a cos(time/$T_{rate}$). The amplitude 33 defines an amount (or a scale) of how pronounced the pixel offset is. Typically a motion may be restricted to a few pixels (typically no more than 1/20 of the screen) to prevent artifacts. Conceptually, only the 3D volume is warped, not the 2D image. The warp moves the 3D depth locations and results in a different 2D pixel "lookup" offset. (Figure 16 attempts to indicate the spatial warp by showing that the edges of the 3D volume are warped)

Figure 16 shows an alternative warp function. In this case, a single, non-repeating pulse 32 (sine wave) can travel through space at some pre-defined speed. This would appear as a single wave radiating from the camera view center (like a ripple on a pond). The wave helps expose different depths in the image by observing the pulse and what it affects over time.

Figure 17 shows another, alternative warp function. In this case, the warp is limited to a specific region of the 3D volume. The user can select for example the house 201 with the mouse (or any user interface); the depth-map then can be used to deterring the 3D location of the mouse selection. Thus the warp may be limited to some predefined range from the 3D mouse location. Typically, there would by a smooth falloff where the warp is slowly decreased to zero within some 3D spatial distance.

Advantages of the embodiments described herein include (but are not limited to) the following features:

- a user can see 3D details of a 2D image on a standard 2D display;
- only a single standard 2D image and a depth-map are required and the motion provides the depth queues;

- stereo image and/or 3D monitor/display are not required.

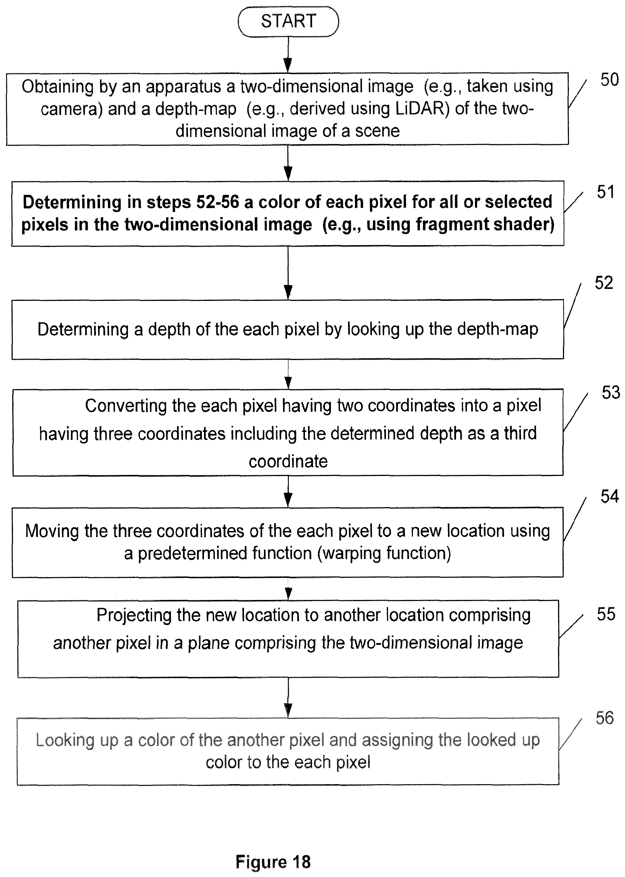

Figure 18 shows an example of a flow chart demonstrating implementation of exemplary embodiments by an apparatus/electronic device (such as a camera, camera-phone, electronic displaying device, computer, etc.). The order of steps shown in Figure 18 is not absolutely required, so in principle, the various steps may be performed out of the illustrated order. Also certain steps may be skipped or selected steps or groups of steps may be performed in a separate application.

In a method according to this exemplary embodiment, as shown in Figure 18, in a first step 50, an apparatus obtains a two-dimensional image (for example, taken by a camera) and a depth-map (such as derived using a LiDAR) of the two-dimensional image of a scene. Step 50 also includes the capture of the camera location, orientation and other camera parameters. The apparatus can acquire the two-dimensional image and the depth-map by itself or receive the data through an input interface (wired or wireless). In a step 51 which includes steps 52-26 and shown for clarity, the apparatus determines a color of each pixel for all or selected (when a certain object is selected through a UI) pixels in the two-dimensional image, for example, using fragment shader, according the various embodiments described herein.

In a step 52, the apparatus determines a depth of the each pixel by looking up the depth-map. In a step 53, the apparatus converts the each pixel having two coordinates into a pixel having three coordinates including the determined depth as a third coordinate. In a step 54, the apparatus moves the three coordinates of the each pixel to a new 3D location using a predetermined function (such as warping function for example). In a step 55, the apparatus projects the new 3D location to another 2D location comprising another pixel in a plane comprising the two-dimensional image. In a step 56, the apparatus looks up a color of another pixel and assigns the looked up color to the each pixel.

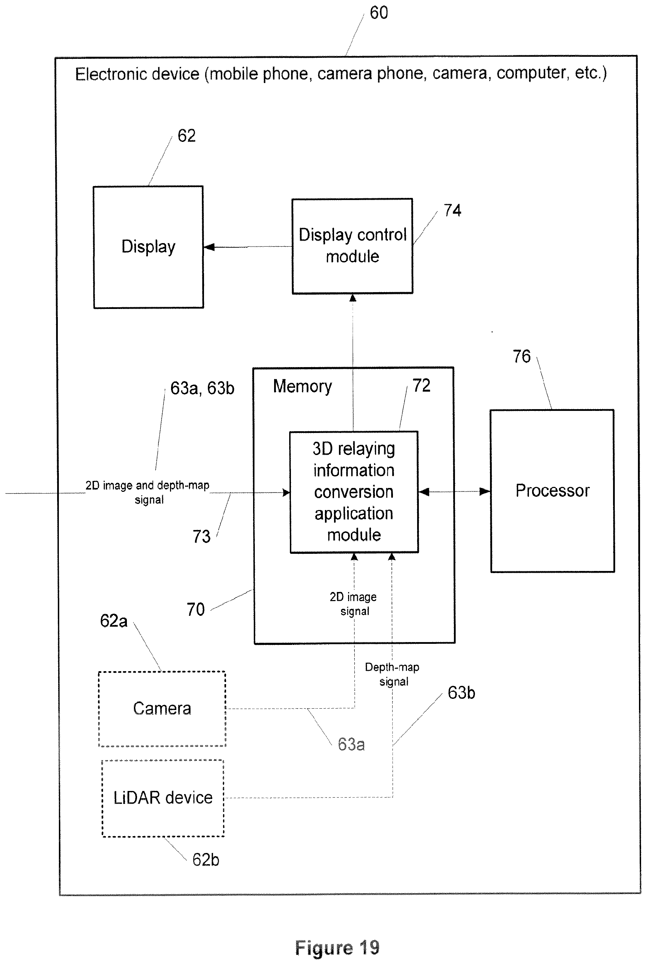

Figure 19 shows an example of a simplified block diagram of an apparatus/electronic device 60 for implementing embodiments of the invention as described herein. Figure 18 is a simplified block diagram of the electronic device that is suitable for practicing the exemplary embodiments of this invention in reference to Figures 1-18, and a specific manner in which components of an electronic device are configured to cause that electronic device 60 to operate. The electronic device 60 may be implemented as a portable or non-portable electronic device, a computer, a wireless communication device with a display, a camera, a camera phone and the like.

The device 60 comprises a 3D relaying information conversion application module (an operating module) 72 for implementing steps 51-56 in Figure 18 as described herein. The module 72 may receive image data 63a and depth-map data 63b via link 73 in step 50 shown in Figure 18. Alternatively the image data 63a and the depth-map data 63b may be generated by a camera 62a and a LiDAR module/device 62b comprised in the apparatus 60. In addition, signal 63a may include camera's "pose" information such as geo-location, orientation, field of view, etc.

Figure 18 also shows a display 62 and a display control module 74.

The device 60 further comprises at least one memory 70 (comprising application module 72) and at least one processor 76.

Various embodiments of the at least one memory 70 (such as computer readable memory for example) may include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like implemented as non-transitory computer readable memories. Various embodiments of the processor 76 include but are not limited to general purpose computers, special purpose computers, microprocessors, digital signal processors (DSPs) and multi-core processors.

The module 72 may be implemented as an application computer program stored in the memory 70, but in general it may be implemented as software, firmware and/or hardware module or a combination thereof. In particular, in the case of software or firmware, one embodiment may be implemented using a software related product such as a computer readable memory (such as non-transitory computer readable memory), computer readable medium or a computer readable storage structure comprising computer readable instructions (such as program instructions) using a computer program code (i.e., the software or firmware) thereon to be executed by a computer processor.

Furthermore, the module 72 may be implemented as a separate block or may be combined with any other module/block of the electronic device 60, or it may be split into several blocks according to their functionality.

It is noted that various non-limiting embodiments described herein may be used separately, combined or selectively combined for specific applications.

Further, some of the various features of the above non-limiting embodiments may be used to advantage without the corresponding use of other described features. The foregoing description should therefore be considered as merely illustrative of the principles, teachings and exemplary embodiments of this invention, and not in limitation thereof.

It is to be understood that the above-described arrangements are only illustrative of the application of the principles of various embodiments. Numerous modifications and alternative arrangements may be devised by those skilled in the art without departing from the scope of the invention, and the appended claims are intended to cover such modifications and arrangements.

The following abbreviations that may be found in the specification and/or the drawing figures are defined as follows:

| 2D | two-dimensional |
|---|---|
| 2 ½ D | two-and-a-half-dimensional |
| 3D | three-dimensional |
| CCD | charged-coupled device |
| CMOS | complimentary metal-oxide-semiconductor |
| FOV | field of view |
| GPU | graphics processing unit (renders synthesized as well as captured content) |
| Hz | Hertz |
| IMS | inertial measurement unit |
| INS | inertial navigation system |
| LiDAR | light detection and ranging |
| PC | personal computer |
| RGB | red, green, blue (common primary colors for electronic displays) |
| UI | user interface |

**Claims**

1. A computer-implemented method comprising:

obtaining (50), by an apparatus (60), a two-dimensional image (200) of a scene and a corresponding depth-map (303) of the scene;
for each of a plurality of pixels (22) in the two-dimensional image, determining a nearby pixel (28) in the two-dimensional image based on a predefined procedure, wherein the predefined procedure is such that the determined nearby pixel is dependent on the depth of the respective pixel according to the depth-map and the determined nearby pixel varies with time according to a predetermined time varying
continuous warping function of the depth of the respective pixel;
assigning to each of the plurality of pixels the color of the respective determined nearby pixel; and
repeating the determining and assigning steps one or more times in order to simulate motion of the plurality of pixels in the two-dimensional image to create a three-dimensional appearance of the two-dimensional image.

2. The method of claim 1, wherein determining a nearby pixel (28) for each of the plurality of pixels (22) based on a predefined procedure comprises:

determining (52) a respective depth (23) for each of the plurality of pixels (22) from the depth-map (303);
converting (53) each of the plurality of pixels having two coordinates into a pixel having three coordinates in a three-dimensional perspective space, including the respective determined depth as a third coordinate;
projecting each of the plurality of pixels into a three-dimensional perspective space;
moving (54) each of the plurality of pixels (24) to respective new three-dimensional locations (26) in the three-dimensional perspective space using a predetermined function;
projecting (55) the respective new three-dimensional locations to new two-dimensional locations (28) in the plane comprising the two-dimensional image (200), wherein the new two-dimensional locations are the respective determined nearby pixels.

3. The method of claim 2, wherein the moving the three coordinates of the plurality of pixels (24) to the new three-dimensional locations (26) is based on the time-varying warping function.

4. The method of claim 3, wherein the warping function is one of a depth sine wave function varying with time or a pulsed function.

5. The method of claim 3, wherein the warping function is limited to a specific region of the three-dimensional perspective space.

6. The method of claim 3, wherein the warping function has one frequency defining a time rate of a wave function and another frequency defining a spatial distance of the wave function.

7. The method of claim 3, wherein the plurality of pixels comprise all or selected pixels in the two-dimensional image (200).

8. The method of claim 7, wherein the selected pixels comprise an object in the two-dimensional image selected through a user interface.

9. The method of claim 1, wherein the determining and assigning steps are performed using a fragment shader.

10. The method of claim 1, wherein obtaining by an apparatus (60) the two-dimensional image (200) of the scene and the corresponding depth-map (303) comprises receiving by the apparatus the two-dimensional image and the depth-map through an input wireless or wired interface.

11. The method of claim 1, wherein obtaining by an apparatus (60) the two-dimensional image (200) of the scene and the corresponding depth-map (303) comprises acquiring by the apparatus the two-dimensional image and the depth-map.

12. The method of claim 11, wherein the depth-map (303) is acquired using a light detection and a ranging module in the apparatus (60).

13. An apparatus (60) configured to:

> obtain (50) a two-dimensional image (200) of a scene and a corresponding depth-map (303) of the scene;
> for each of a plurality of pixels (22) in the two-dimensional image, determine a nearby pixel (28) in the two-dimensional image based on a predefined procedure, wherein the predefined procedure is such that the determined nearby pixel is dependent on the depth of the respective pixel according to the depth-map and the determined nearby pixel varies with time according to a predetermined time varying continuous warping function of the depth of the respective pixel;
> assign to each of the plurality of pixels the color of the respective determined nearby pixel; and
> repeat the determining and assigning steps one or more times in order to simulate motion of the plurality of pixels in the two-dimensional image to create a three-dimensional appearance of the two-dimensional image.

14. The apparatus of claim 13, wherein the apparatus (60) is further configured to perform the methods as claimed in any of the claims 2 to 12.

15. A computer program product comprising a non-transitory computer readable medium bearing computer program code embodied herein for use with a computer, the computer program code comprising code for performing the methods as claimed in any of the claims 1 to 12.

**Patentansprüche**

1. Computerimplementiertes Verfahren, umfassend:

> Erhalten (50) eines zweidimensionalen Bildes (200) einer Szene und einer entsprechenden Tiefen-Map (303) der Szene durch eine Vorrichtung (60);
> Bestimmen eines nahegelegenen Pixels (28) in dem zweidimensionalen Bild basierend auf einem vordefinierten Verfahren für jedes von mehreren Pixeln (22) in dem zweidimensionalen Bild, wobei das vordefinierte Verfahren derart ist, dass das bestimmte nahe gelegene Pixel von der Tiefe des jeweiligen Pixels gemäß der Tiefen-Map abhängig ist und das bestimmte nahegelegene Pixel mit der Zeit gemäß einer vorbestimmten zeitabhängigen kontinuierlichen Verzerrungsfunktion der Tiefe des jeweiligen Pixels variiert;
Zuweisen der Farbe des jeweiligen bestimmten nahe gelegenen Pixels zu jedem der mehreren Pixel; und
Einmaliges oder mehrmaliges Wiederholen der Bestimmungs- und Zuweisungsschritte, um eine Bewegung der mehreren Pixel in dem zweidimensionalen Bild zu simulieren, um ein dreidimensionales Erscheinungsbild des zweidimensionalen Bildes zu erzeugen.

2. Verfahren nach Anspruch 1, wobei das Bestimmen eines nahe gelegenen Pixels (28) für jedes der mehreren Pixel (22) basierend auf einem vordefinierten Verfahren Folgendes umfasst:

> Bestimmen (52) einer jeweiligen Tiefe (23) für jedes der mehreren Pixel (22) aus der Tiefen-Map (303);
> Umwandeln (53) jedes der mehreren Pixel umfassend zwei Koordinaten in ein Pixel umfassend drei Koordinaten in einem dreidimensionalen perspektivischen Raum, einschließlich der jeweiligen bestimmten Tiefe als dritte Koordinate;
> Projizieren jedes der mehreren Pixel in einen dreidimensionalen perspektivischen Raum;
> Bewegen (54) jedes der mehreren Pixel (24) zu entsprechenden neuen dreidimensionalen Positionen (26) im dreidimensionalen perspektivischen Raum unter Verwenden einer vorbestimmten Funktion;
> Projizieren (55) der jeweiligen neuen dreidimensionalen Positionen auf neue zweidimensionale Positionen (28) in der Ebene, die das zweidimensionale Bild (200) umfasst, wobei die neuen zweidimensionalen Positionen die jeweils bestimmten nahe gelegenen Pixel sind.

3. Verfahren nach Anspruch 2, wobei das Bewegen der drei Koordinaten der mehreren Pixel (24) zu den neuen dreidimensionalen Positionen (26) auf der zeitveränderlichen Verzerrungsfunktion basiert.

4. Verfahren nach Anspruch 3, wobei die Verzerrungsfunktion eine mit der Zeit variierende Tiefensinuswellenfunktion oder eine Impulsfunktion ist.

5. Verfahren nach Anspruch 3, wobei die Verzerrungsfunktion auf einen bestimmten Bereich des dreidimensionalen perspektivischen Raums begrenzt ist.

6. Verfahren nach Anspruch 3, wobei die Verzerrungsfunktion eine Frequenz aufweist, die eine Zeitrate einer Wellenfunktion definiert, und eine andere Frequenz, die einen räumlichen Abstand der Wellenfunktion definiert.

7. Verfahren nach Anspruch 3, wobei die mehreren Pixel alle oder ausgewählte Pixel in dem zweidimensionalen Bild (200) umfassen.

8. Verfahren nach Anspruch 7, wobei die ausgewählten Pixel einen Gegenstand in dem zweidimensionalen Bild umfassen, der durch eine Benutzerschnittstelle ausgewählt ist.

9. Verfahren nach Anspruch 1, wobei die Bestimmungs- und Zuweisungsschritte unter Verwenden eines Fragment-Shaders durchgeführt werden.

10. Verfahren nach Anspruch 1, wobei das Erhalten des zweidimensionalen Bildes (200) der Szene und der zugehörigen Tiefen-Map (303) durch eine Vorrichtung (60) das Erhalten des zweidimensionalen Bildes und der Tiefen-Map durch die Vorrichtung über eine drahtlose oder drahtgebundene Eingabe-Schnittstelle umfasst.

11. Verfahren nach Anspruch 1, wobei das Erhalten des zweidimensionalen Bildes (200) der Szene und der zugehörigen Tiefen-Map (303) durch eine Vorrichtung (60) das Erhalten des zweidimensionalen Bildes und der Tiefen-Map durch die Vorrichtung umfasst.

12. Verfahren nach Anspruch 11, wobei die Tiefen-Map (303) unter Verwenden einer Lichterfassung und eines Entfernungsmoduls in der Vorrichtung (60) erfasst wird.

13. Vorrichtung (60), die konfiguriert ist, um:

ein zweidimensionales Bild (200) einer Szene und eine entsprechende Tiefen-Map (303) der Szene zu erhalten (50);
für jedes der mehreren Pixel (22) in dem zweidimensionalen Bild ein nahe gelegenes Pixel (28) in dem zweidimensionalen Bild basierend auf einem vordefinierten Verfahren zu bestimmen, wobei das vordefinierte Verfahren derart ist, dass das bestimmte nahe gelegene Pixel von der Tiefe des jeweiligen Pixels gemäß der Tiefen-Map und des bestimmten nahe gelegenen Pixels mit der Zeit gemäß einer vorbestimmten zeitabhängigen kontinuierlichen Verzerrungsfunktion der Tiefe des jeweiligen Pixels variiert;
jedem der mehreren Pixel die Farbe des jeweiligen bestimmten nahe gelegenen Pixels zuzuweisen; und
einmaliges oder mehrmaliges Wiederholen der Bestimmungs- und Zuweisungsschritte, um das Bewegen der mehreren Pixel in dem zweidimensionalen Bild zu simulieren, um ein dreidimensionales Erscheinungsbild des zweidimensionalen Bildes zu erzeugen.

14. Vorrichtung nach Anspruch 13, wobei die Vorrichtung (60) ferner konfiguriert ist, um die Verfahren nach einem oder mehreren der Ansprüche 2 bis 12 durchzuführen.

15. Computerprogrammprodukt, umfassend ein dauerhaftes computerlesbares Medium umfassend einen Computerprogrammcode, das hierin zur Verwendung mit einem Computer verkörpert ist, wobei der Computerprogrammcode Code zum Ausführen der Verfahren nach einem der Ansprüche 1 bis 12 umfasst.

**Revendications**

1. Procédé mis en oeuvre par ordinateur consistant à :

obtenir (50), au moyen d'un appareil (60), une image bidimensionnelle (200) d'une scène et une carte de profondeur correspondante (303) de la scène ;
pour chacun d'une pluralité de pixels (22) dans l'image bidimensionnelle, déterminer un pixel voisin (28) dans l'image bidimensionnelle sur la base d'une procédure prédéfinie, la procédure prédéfinie étant telle que le pixel voisin déterminé dépend de la profondeur du pixel respectif d'après la carte de profondeur et telle que le pixel voisin déterminé varie avec le temps d'après une fonction de déformation continue, variable dans le temps et prédéterminée de la profondeur du pixel respectif ;
attribuer à chacun de la pluralité de pixels la couleur du pixel voisin déterminé respectif ; et
répéter les étapes de détermination et d'attribution une ou plusieurs fois afin de simuler le déplacement de la pluralité de pixels dans l'image bidimensionnelle en vue de créer un aspect tridimensionnel de l'image bidimensionnelle.

2. Procédé selon la revendication 1, dans lequel la détermination d'un pixel voisin (28) pour chacun de la pluralité de pixels (22) sur la base d'une procédure prédéfinie consiste à :

déterminer (52) une profondeur respective (23) pour chacun de la pluralité de pixels (22) à partir de la carte de profondeur (303) ;
convertir (53) chacun de la pluralité de pixels ayant deux coordonnées en un pixel ayant trois coordonnées dans un espace en perspective tridimensionnel, y compris la profondeur déterminée respective en tant que troisième coordonnée ;

projeter chacun de la pluralité de pixels dans un espace en perspective tridimensionnel ;

déplacer (54) chacun de la pluralité de pixels (24) vers de nouveaux emplacements tridimensionnels respectifs (26) dans l'espace en perspective tridimensionnel par le biais d'une fonction prédéterminée ;

projeter (55) les nouveaux emplacements tridimensionnels respectifs vers de nouveaux emplacements bidimensionnels (28) dans le plan comprenant l'image bidimensionnelle (200), les nouveaux emplacements bidimensionnels étant les pixels voisins déterminés respectifs.

3. Procédé selon la revendication 2, dans lequel le déplacement des trois coordonnées de la pluralité de pixels (24) vers les nouveaux emplacements tridimensionnels (26) est fondé sur la fonction de déformation variable dans le temps.

4. Procédé selon la revendication 3, dans lequel la fonction de déformation est une fonction d'onde sinusoïdale de profondeur variable dans le temps ou une fonction puisée.

5. Procédé selon la revendication 3, dans lequel la fonction de déformation est limitée à une région spécifique de l'espace en perspective tridimensionnel.

6. Procédé selon la revendication 3, dans lequel la fonction de déformation possède une fréquence définissant un taux de temps d'une fonction d'onde et une autre fréquence définissant une distance spatiale de la fonction d'onde.

7. Procédé selon la revendication 3, dans lequel la pluralité de pixels comprend tous les pixels ou des pixels sélectionnés dans l'image bidimensionnelle (200).

8. Procédé selon la revendication 7, dans lequel les pixels sélectionnés comprennent un objet dans l'image bidimensionnelle sélectionnée par le biais d'une interface utilisateur.

9. Procédé selon la revendication 1, dans lequel les étapes de détermination et d'attribution sont effectuées au moyen d'un fragment shader.

10. Procédé selon la revendication 1, dans lequel l'obtention, par un appareil (60), de l'image bidimensionnelle (200) de la scène et de la carte de profondeur correspondante (303) consiste à recevoir, par l'appareil, l'image bidimensionnelle et la carte de profondeur par le biais d'une interface d'entrée sans fil ou filaire.

11. Procédé selon la revendication 1, dans lequel l'obtention, par un appareil (60), de l'image bidimensionnelle (200) de la scène et de la carte de profondeur correspondante (303) consiste à acquérir, par l'appareil, l'image bidimensionnelle et la carte de profondeur.

12. Procédé selon la revendication 11, dans lequel la carte de profondeur (303) est obtenue par le biais d'un détecteur de lumière et d'un module de télémétrie dans l'appareil (60).

13. Appareil (60) configuré pour :

obtenir (50) une image bidimensionnelle (200) d'une scène et une carte de profondeur correspondante (303) de la scène ;

pour chacun d'une pluralité de pixels (22) dans l'image bidimensionnelle, déterminer un pixel voisin (28) dans l'image bidimensionnelle sur la base d'une procédure prédéfinie, la procédure prédéfinie étant telle que le pixel voisin déterminé dépend de la profondeur du pixel respectif d'après la carte de profondeur et telle que le pixel voisin déterminé varie avec le temps d'après une fonction de déformation continue, variable dans le temps et prédéterminée de la profondeur du pixel respectif ;

attribuer à chacun de la pluralité de pixels la couleur du pixel voisin déterminé respectif ; et

répéter les étapes de détermination et d'attribution une ou plusieurs fois afin de simuler le déplacement de la pluralité de pixels dans l'image bidimensionnelle en vue de créer un aspect tridimensionnel de l'image bidimensionnelle.

14. Appareil selon la revendication 13, l'appareil (60) étant en outre configuré pour exécuter les procédés selon au moins l'une des revendications 2 à 12.

15. Produit de programme informatique comprenant un code de programme informatique portant un support lisible par ordinateur non transitoire incorporé pour une utilisation avec un ordinateur, le code de programme informatique comprenant le code nécessaire pour l'exécution des procédés selon au moins l'une des revendications 1 à 12.

200

201

203

209

25

207

205

## Figure 1a

200

25

250

## Figure 1b

Figure 2a

LiDAR scan of scene
(density reduced for depitcion)

Figure 2b

Figure 3

Figure 4

200a

Figure 5

200a

Figure 6

Figure 7

Figure 8

Figure 9

Figure 10

Figure 11

Figure 12

Figure 13

Figure 14

20

Spatialy warpped View Frustrum
(warpped 3D Space)

30

Warpped 2D Image Plane

200a

Warp Function
$\Delta x = \cos(time/T_{rate} + depth/D_{rate})*Amp$

Amplitude

33

31

Camera Origin

Spatial Frequency = $1/D_{rate}$

30

Φ (phase shift)

where Phase shift is
$\Phi = \cos(time/T_{rate})$

35

Figure 15

Spatialy warpped View Frustrum
(warpped 3D Space)

32

20

Warpped 2D Image Plane

200a

Camera Origin

32

Pulse moves with time through space

Figure 16

Targeted warped Region.
Only specified region is warped
e.g. Based on mouse over house

20

Warpped 2D Image Plane

201

200a

Camera Origin

Warp Function
$\Delta x = \cos(time/T_{rate} + depth/D_{rate})*Amp$

Amplitude

33

30

31

Spatial Frequency = 1/Drate

Φ (phase shift)

35

where Phase shift is
Φ=cos(time/Trate)

Figure 17

( START )

Obtaining by an apparatus a two-dimensional image (e.g., taken using camera) and a depth-map (e.g., derived using LiDAR) of the two-dimensional image of a scene — 50

**Determining in steps 52-56 a color of each pixel for all or selected pixels in the two-dimensional image (e.g., using fragment shader)** — 51

Determining a depth of the each pixel by looking up the depth-map — 52

Converting the each pixel having two coordinates into a pixel having three coordinates including the determined depth as a third coordinate — 53

Moving the three coordinates of the each pixel to a new location using a predetermined function (warping function) — 54

Projecting the new location to another location comprising another pixel in a plane comprising the two-dimensional image — 55

Looking up a color of the another pixel and assigning the looked up color to the each pixel — 56

**Figure 18**

/60

**Electronic device (mobile phone, camera phone, camera, computer, etc.)**

62

Display

74

Display control module

← Processor → 76

63a, 63b

**Memory** 72

3D relaying information conversion application module

73

2D image and depth-map signal

70

2D image signal

62a

Camera

Depth-map signal

63a

63b

LiDAR device

62b

Figure 19

**EP 2 962 290 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070279415 A1
- US 20100315412 A1
- US 20100215250 A1